# EUROPEAN PATENT APPLICATION

(11) **EP 4 265 906 A1**
(43) Date of publication of application: **25.10.2023**
(21) Application number: 22382376.6
(22) Date of filing: 21.04.2022
(51) Int. Cl.: F03D 13/40, B23Q 1/52

(54) **SUPPORT FOR ROTATING A COMPOSITE PART AND RELATED METHODS**

(71) Applicant: LM Wind Power A/S, 6000 Kolding (DK)
(72) Inventor: RAZEGHI, Rama, Eastleigh, SO53 4SE (GB); LÓPEZ FOLGUERAL, Victor, 24416 Ponferrada (ES); R, Balaji, 562111 Bengaluru (IN)
(74) Representative: de Rooij, Mathieu Julien

(57) **Abstract**

The present disclosure relates to support and support assemblies for rotating a composite part. The support comprises a stationary support and a rotatable support, wherein the stationary support is configured to support the rotatable support, and the rotatable support is configured to receive and secure the composite part, and wherein the rotatable support is configured to rotate with respect to the stationary support. The present disclosure further relates to methods and assemblies for rotating composite parts.

## Description

### FIELD

The present disclosure relates to methods and systems for handling spar caps of wind turbine blades. More particularly, the present disclosure relates to methods and systems for rotating a spar cap. Further, the present disclosure also relates to support assemblies for rotating composite parts and methods for rotating the same.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven") or through the use of a gearbox. This way, the generator produces electricity which can be supplied to the electrical grid.

In order to extract more energy from the wind, the size of the rotor diameter is increased by increasing the dimensions of the wind turbine blades. The larger size of the blades introduces higher physical loads into the blade and related components. Wind turbine rotor blades generally comprise a body shell formed by two shell halves of a composite material e.g. glass fiber reinforced composites.

The body shell is relatively lightweight and has structural properties that are not designed to withstand the bending moments and other loads acting on the blade during operation. To improve the structural properties of the rotor blade such as stiffness and strength, the blade is generally reinforced with structural components, e.g. one or more spar caps at the suction and pressure side of the blade with a shear web connecting them. Such a spar cap may also be called a "main laminate" or a "spar cap laminate" of a wind turbine blade. These terms may be used interchangeably throughout the present disclosure.

Spar caps and other composites can be manufactured using several materials such as glass fiber laminate composites and carbon fiber laminate composites. Modern spar caps may be manufactured using pultruded composites, particularly carbon fiber based pultruded composites. Fiber laminates or fiber pultrusion plates are generally bonded together in a resin infused process to form a composite part such as a spar cap. After the infusion and curing process, the composite part is unmolded to later carry out post molding tasks such as inspection of the quality of the manufactured component and e.g. one or more treatments such as a surface treatment to improve the quality.

Inspection is carried out to examine if the product has some imperfections that may affect mechanical properties of the component or the ability to carry out further manufacturing processes. Visual inspection, ultrasonic techniques, radiographic techniques, acoustic techniques and other techniques may be used to verify that the quality of the component meets the relevant internal or external quality standards. Additionally, surface treatment techniques may be applied to the composite component to reduce surface imperfections, to remove excess of material e.g. resin, or to prepare the surface for a subsequent manufacturing step, such as for example bonding with another material or composite. Surface treatment techniques may include removing peel ply, grinding, sanding, media blasting, and others.

Inspection and surface treatment techniques may generally be carried out on both sides of the composite component. Thus, to facilitate these processes, the composite component is generally rotated several times until all tasks are completed and the component is set aside.

Due to the dimensions and weight of the composite components involved in wind turbine manufacture, the rotation of composite components is generally carried out with the aid of lifting equipment, i.e. cranes or a crane with a long jib with holding elements such as slings that lift the component and aid qualified operators to rotate the component. This results in a very time-consuming process where a plurality of operators is required to control and guide the rotation of the composite part. Further, it poses a certain degree of risk for the operators and may even affect the final quality of the product if the rotation is not carried out precisely. This results in a complex task that requires intense manual labor, and which may affect the production rate of the final product.

The present disclosure provides examples of supports and methods that at least partially overcome some of the drawbacks of existing approaches.

### SUMMARY

In a first aspect, a support for rotating a composite part is provided. The support comprises a stationary support and a rotatable support. The stationary support is configured to support the rotatable support. Additionally, the rotatable support is configured to receive the composite part and secure it. Further, the rotatable support is configured to rotate with respect to the stationary support. The rotatable support is also configured to maintain an orientation of the composite part at a plurality of discrete angular positions.

According to this first aspect, the support allows rotating a composite part, such as for example a spar cap, without the use of additional lifting equipment. Further, since the rotatable support is configured to secure the composite part, additional work can be done on the composite part while retaining the composite part in the support. Moreover, the fact that the rotatable support is configured to rotate the composite part to a plurality of discrete angular positions can facilitate considerably the inspection and surface treatment of the composite part. At the same time, manual rotation of the part may be reduced or dispensed with, which reduces risks or hazardous situations and may provide an enhanced production rate of the composite parts.

In another aspect, a method for rotating a spar cap using rotatable supports is provided. The method comprises providing a spar cap on a plurality of rotatable supports and securing the spar cap to the plurality of rotatable supports. Additionally, the method includes rotating the plurality of rotatable supports to modify an orientation of the spar cap.

According to this aspect, the method allows rotating a spar cap in a safe and reliable manner. Further, the rotation of the spar cap may be at all times controlled, it does not require the manual guidance of operators and does not require lifting equipment such as cranes or others. This can reduce safety risks for the operators and makes the rotation process much more streamlined. Further, it reduces considerably the number of operators that are required to rotate the spar cap safely.

Throughout this disclosure, the terms "pultruded composites", "pultruded plates", "pultrusions" or similar terms are generally used to define reinforced materials (e.g. fibers or woven or braided strands) that are impregnated with a resin and pulled through a heated die such that resin cures.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2A is a schematic diagram illustrating a wind turbine blade according to one example;
Figure 2B schematically illustrates an internal structure of a wind turbine blade;
Figure 2C illustrates a molding system which may be used in the manufacture of a wind turbine blade;
Figure 3 schematically illustrates a support according to one example;
Figure 4 schematically illustrates a support according to another example;
Figure 5 schematically illustrates the support of figure 3 in another configuration;
Figure 6 schematically illustrates another example of a support according to the present disclosure;
Figure 7 schematically illustrates a perspective view of a support assembly according to one example;
Figure 8 schematically illustrates a top view of a support assembly according to another example;
Figures 9 and 10 schematically illustrate an example of a support assembly comprising a plurality of supports; and
Figure 11 is a flow diagram of a method for rotating a spar cap according to one example.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

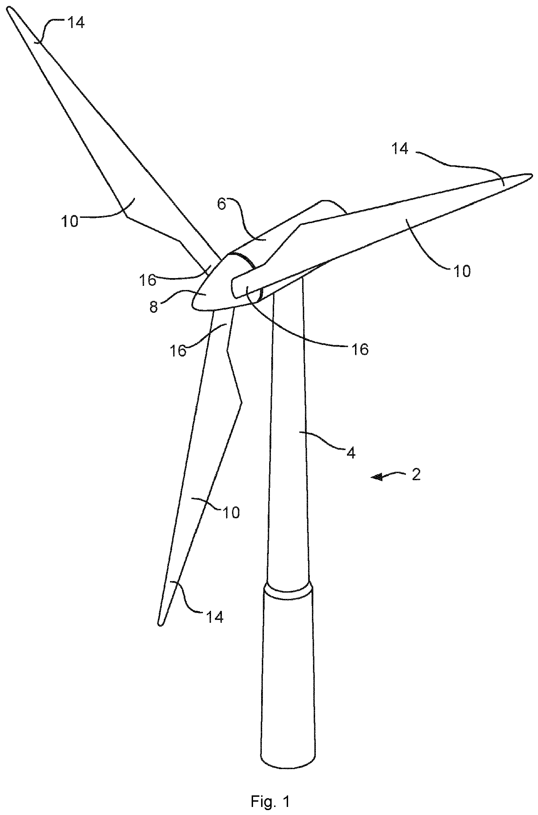

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

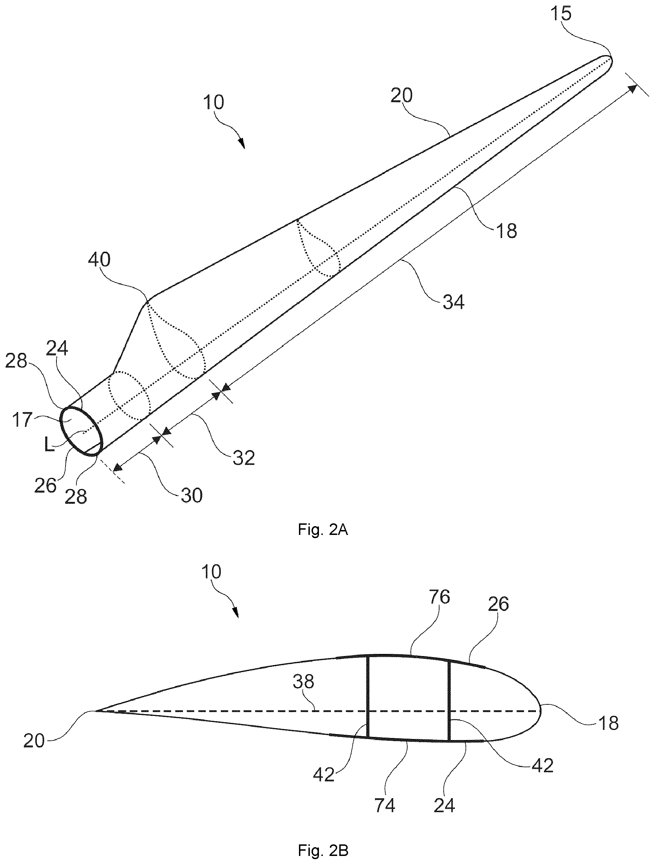

Fig. 2A shows a schematic view of an exemplary wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance r from the hub. The airfoil region 34 has an airfoil profile with a chord extending between the leading edge 18 and the trailing edge 20 of the blade 10. The width of the chord decreases with increasing distance r from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub. The wind turbine blade 10 comprises a blade shell comprising two blade shell parts or half shells, a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 has a semi-circular or semi-oval outer cross-sectional shape.

Fig. 2B is a schematic diagram illustrating a cross sectional view of an exemplary wind turbine blade 10, e.g. a cross sectional view of the airfoil region of the wind turbine blade 10. The wind turbine blade 10 comprises a leading edge 18, a trailing edge 20, a pressure side 24, a suction side 26 a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

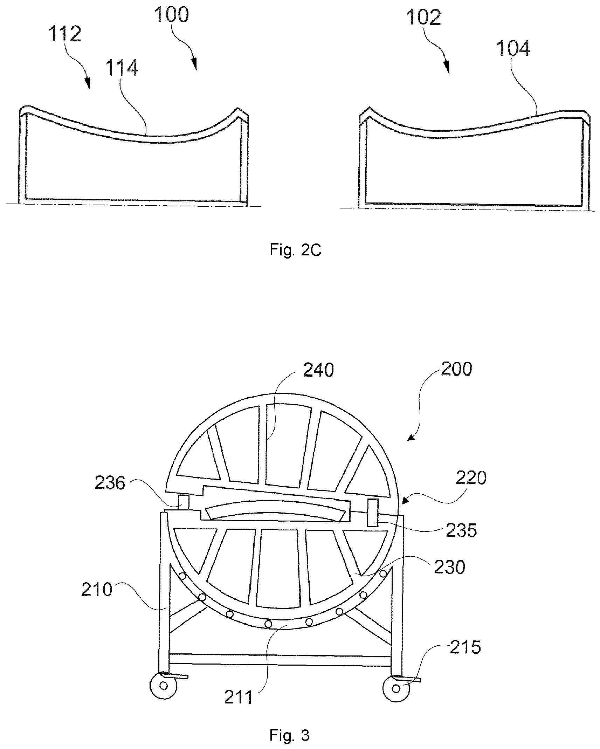

Fig. 2C is a schematic diagram illustrating an exemplary mold system for molding a blade shell of a wind turbine blade. The mold system 100 comprises a first mold 102 and a second mold 112. The first mold 102 is configured for manufacturing a first blade shell part of a wind turbine blade, such as an upwind shell part of the wind turbine blade (forming the pressure side). The second mold 112 is configured for manufacturing a second blade shell part of the wind turbine blade, such as a downwind shell part of the wind turbine blade (forming the suction side). The mold system 100 further comprises mold surfaces 104, 114 for depositing fibers.

Figure 3 schematically illustrates a front view of a support 200 according to one example. The support 200 is configured for rotating a composite part 201 and comprises a stationary support 210 and a rotatable support 220. The stationary support 210 is configured to support the rotatable support 220. Besides, the rotatable support 220 is configured to receive the composite part 201, and secure the composite part 201. Additionally, the rotatable support 220 is configured to rotate with respect to the stationary support 210 and to maintain an orientation of the composite part 201 at a plurality of discrete angular positions.

The composite part may be an elongate part. Particularly, the composite part may be a spar cap with a length of e.g. 30 meters or more, specifically 50 or 60 meters or more, and more specifically 70 meters or more.

The rotatable support 220 may comprise a receiving area 223 for the composite part 201. Thus, the rotatable support 220 may receive the composite part 201 at a substantially flat receiving surface 223. Alternatively, the receiving area 223 may be shaped and dimensioned to match the shape of the composite part 201, i.e. it may have a curved cross-section.

The rotatable support 220 may further include a guiding plane 222. In some examples, a loading station and/or an unloading station may be provided on either side of the support 200. A spar cap or other composite part may be positioned on a loading station. In some examples, the spar cap or composite part may be slid from the loading station over the guiding plane to the receiving area 223. After rotating over 180 degrees, the part may be slid out of the receiving area 223 to the unloading station. At the unloading station, further processes (sanding, cleaning, inspection or other) may be carried out, or the part may be picked up for further processing elsewhere.

In some examples, the rotatable support 220 may comprise two portions 230, 240. A first portion 230 may be configured to receive the composite part 201 and a second portion 240 may be configured to secure the composite part 201. Thus, the composite part 201 may be secured during rotation to avoid undesired movements of the same. The composite part 201 may be at least partially unsecured during surface treatment tasks or during inspection so that the operators can reach the area hidden beneath the securing element.

In examples, the rotatable support 220 may comprise straps to secure the composite part 201 to the rotatable support 220. The straps may be tensioned using ratchets or others. Other elements such us pins, clamping devices, pressure pads, fastening plates or others can also be used to secure the composite part 201 to the rotatable support 220. These elements, i.e. clamping devices, may be mounted in the rotatable support 220 and may be manually or automatically adjusted to press on the composite part 201.

In the example illustrated in figure 3, the first and second portions 230, 240 of the rotatable support 220 comprise a hinged connection 235. This allows rotation of one portion relative to the other to provide access to the receiving area 223. Other type of connections between the first and the second portions 223, 240 can also be employed, as will be discussed below.

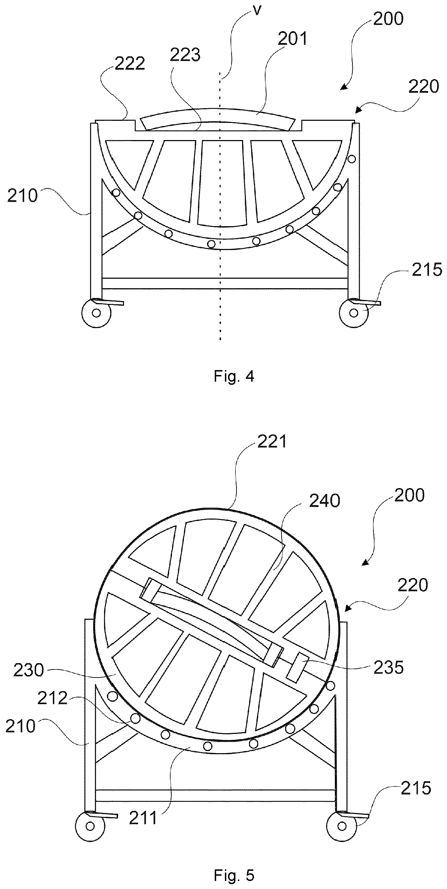

In examples, the support 200 may further comprise a coupling mechanism 236 to hold the two portions 230, 240 of the rotatable support 220 together. Said coupling mechanism 236 may comprise a male-female connector located in the stationary support 210 and/or in the rotatable support 220. If the coupling mechanism 236 is located in the rotatable support 220, it may allow to keep the two portions 230, 240 together independently from the stationary support 210. Other coupling mechanisms can be employed. Note that in figure 3, the two portions 230, 240 of the rotatable support 220 are partially opened and the coupling mechanism 236 is not holding them together. A configuration wherein the two portions 230, 240 of the rotatable support 220 are closed and the composite part 201 is secured is shown in figure 5.

As shown in figure 3, in some examples the support 200 may include a plurality of wheels 215 to easily move the support 200 and arrange it at a desired location.

Figure 4 illustrates another example of the support 200 according to the present disclosure. Note that the support 200 in figure 4 has been illustrated without the second portion 240 of the rotatable support 220. As illustrated, the first and second portions 230, 240 of the rotary support may be detachable. The first and second portions 230, 240 may be disconnected from each other at different instances during composite manipulation, treatment, or inspection. It may be convenient to detach the two portions 230, 240 before laying the composite part 201 in the support 200 so that the operators have more space to maneuver. Similarly, it may be convenient to detach the two portions 230, 240 after rotation and before performing a surface treatment step or a surface inspection step. This may improve the accessibility of the composite part 201.

In some examples, the support 200 may comprise a stationary support 210 configured to change the position of a contact surface with the rotatable support 220 along a vertical axis v, i.e. using telescopic legs, a sliding mechanism or others. This may allow to accommodate composite parts 201 of different dimensions and shapes. In examples, the composite part 201 may be substantially flat and the height of a plurality of supports 200 arranged together may be the same. Further, the composite part 201 may be placed such that the center of gravity of the composite part 201 substantially coincides with the center of rotation of the rotatable support 220. This may facilitate rotation of the composite part 201. In other examples, a plurality of supports 200 may be used to hold and rotate a composite part 201 with a curved surface. Each of the plurality of supports 200 may have the receiving area 223 at a different height to compensate curvature of the composite part 201.

In examples, the receiving area 223 of the support 200 may not be located at a center of rotation of the support 200. This may promote rotating curved composite parts 201 without inducing unnecessary tension in the composite part 201.

Figure 5 schematically shows the rotation of the support 200 illustrated in figure 3. The support 200 comprises a stationary support 210 including a contact surface 211 to support the rotatable support 220. Further, the two portions 230, 240 of the rotatable support 220 define a frame 221 comprising an outer surface that substantially matches the contact surface 211 of the stationary support 210. In some examples, the contact surface 211 of the stationary support 210 may be substantially concave and the frame 221 of the rotatable support 220 may be substantially circular.

In some examples, the rotatable support may be rotated manually. An operator or multiple operators may provide the force or torque necessary to rotate the rotatable support with respect to the stationary support. If a composite part (like a spar cap) is simultaneously supported my multiple supports 200 which are spaced from each other, each of the corresponding rotatable supports 220 may be rotated at the same time. Physical links may be provided between the different supports such that if one rotatable support is rotated, this rotation is mechanically transmitted to other supports.

In other examples, one or more of the supports 200 may comprise a drive (such as a motor) to provide the torque necessary for rotating.

In some examples, the rotary support 220 may include a shaft (not shown) extending from the rotary support 220 and acting as an axis of rotation. Additionally, the shaft may be rotatably supported by the stationary support 210.

In examples, the support 200 may comprise a brake system to reduce the rotation rate of the rotatable support 220. The brake system may include hydraulic brakes, pneumatic brakes, mechanic brakes, electromagnetic brakes or others. The brake system may be located in one of the rotatable support 220 or in the stationary support 210. Further, the support 200 may include in the other one of the rotatable support 220 or the stationary support 210 a race for the brake system to act. Similarly to what was previously discussed with respect to figure 3, the support 200 may comprise a locking mechanism to fix a position of the rotatable support 210 relative to the stationary support 220. Thus, the brake system may be used to reduce the velocity of rotation, and once the rotatable support 210 is still, the locking mechanism may be activated to fix the position, i.e. angular position, and the brake system released.

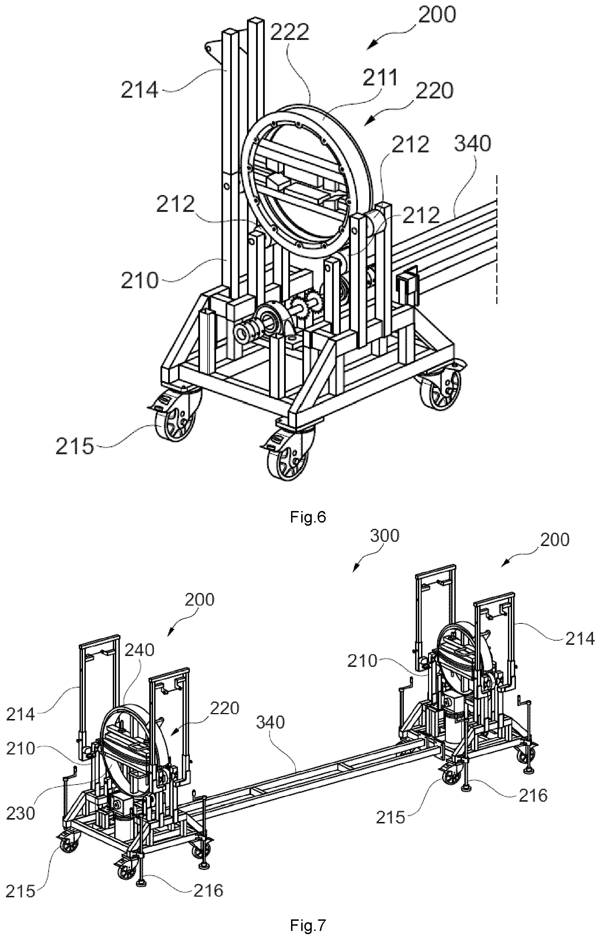

Figure 6 schematically illustrates a perspective view of a support 200 according to another example. As illustrated, the support 200 may be connected to an additional similar support (not shown) through a link 340.

The support 200 comprises a stationary support 210 and a rotatable support 220. The stationary support 210 is configured to support the rotatable support 220. In this example, the stationary support 210 may comprise a drive to provide the necessary torque and promote rotation of the rotatable support 220.

The support(s) 200 may comprise one or more actuators that are activated by the drive. The support(s) 200 may comprise one or more rotatable elements 212 configured to rotate the rotatable support 220. The rotatable elements 212 may engage with a circular contact surface 211 of the rotatable support 220. In examples, at least one of the rotatable elements 212 may be a pinion gear that may mesh with a ring gear 222 of the rotatable support 220. Additionally or alternatively, the rotatable elements 212 may also comprise low friction rollers configured to at least partially guide the rotatable support 220 and promote a stable rotation of the same. The low friction rollers may freely rotate and may be distributed around the periphery of the rotatable support 220.

Besides, the drive may be fed by a controller. Thus, the controller may feed the drive with a variable frequency drive power signal or a variable amplitude power signal. The controller may modulate the signal sent to the drive to increase or decrease the rotation speed and/or torque of the drive, and therefore of the rotatable support 220.

Additionally, the stationary support 210 of the support 200 may comprise an upright extension 214 configured to receive a portion of the rotatable support 220 when the rotatable support is opened. Thus, in examples where the rotatable support 220 comprises two portions that are movable, i.e. joined with a hinge, an operator may open the rotatable support 220 and secure the corresponding portion to the upright extension 214. This provides a more secure arrangement and limits the risk of accident or injury of the operators in the vicinity of the support 200.

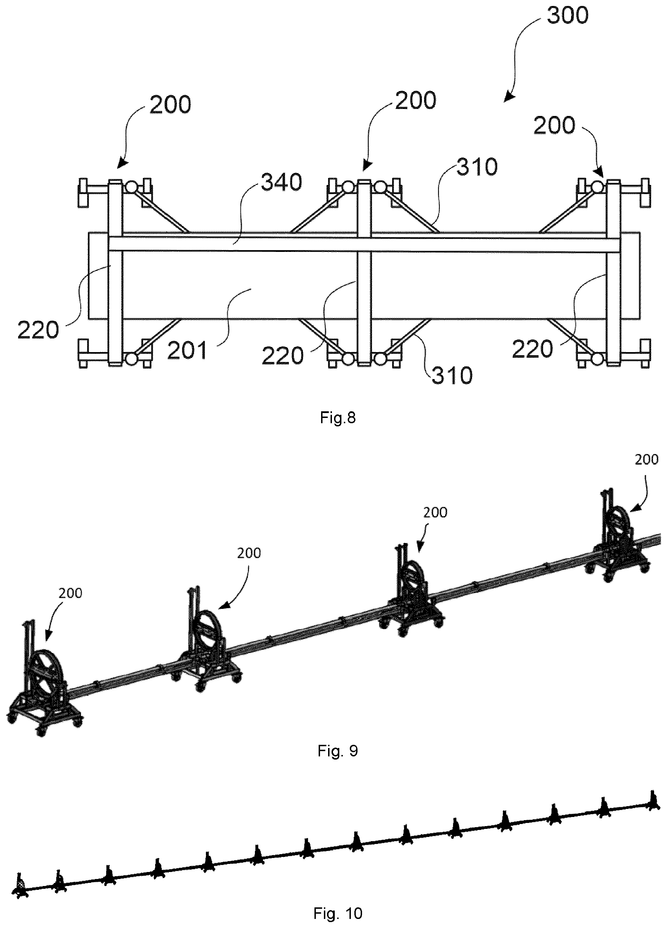

Figure 7 illustrates a perspective view of a support assembly 300 for rotating a composite part (not shown) according to an example of the present disclosure. Note that the support assembly 300 illustrated includes two supports 200 but other numbers of supports 200 may be employed, as will be discussed in relation to figure 8. The supports 200 comprise a stationary support 210, a rotatable support 220 and a link 340 between supports 200. The stationary supports 210 are configured to support and guide the respective rotatable supports 220. Further, the rotatable supports 220 are configured to receive the composite part and secure it.

In the example of figure 7, the rotatable support 220 comprises two portions 230, 240 which have been illustrated in a closed configuration. The two portions 230, 240 may be at least partially opened to receive a composite part. Once the composite part has been placed and secured to the rotatable supports 220, a drive may start rotation of the rotatable support 220. The drive may be operatively coupled with one or more actuators, such as low friction rollers and gears, i.e. pinion gears, worm screws or others. Thus, the drive my provide a smooth rotation of the composite part. The drive may provide a rotation precision of at least 2 degrees (i.e. nearly 0.1 π radians) to the rotatable support 220, and more precisely of at least 1 degree (i.e. nearly 0.05π radians).

Further, figure 7 shows that the assembly 300 may freely move around a site, i.e. a manufacturing plant, thanks to the wheels 215 located below the supports 200. Besides, to secure and level the assembly 300, the supports 200 may include a height adjustment assembly 216 to control the height and relative inclination of each of the supports 200.

Additionally, a physical link 340 may be provided between the supports 200. A link may be configured to provide synchronization in rotation of the rotatable supports 220. The link may provide synchronization by means of a controller and a set of actuators, which control the rotation of the rotatable supports 210. Additionally, the link 340 my provide synchronization by combining an electronic synchronization with a mechanical synchronization, i.e. it may control a few master rotary supports which are mechanically linked with slave supports. Thus, the link 340 is one or more of a mechanical link, or a communication link between drives of the rotatable supports 220.

As can also be seen in figure 7, the stationary support 210 may comprise one or more upright extensions 214 configured to receive a portion of the rotatable support 220 when this is in an opened configuration.

In any of the examples disclosed herein, the supports 200 may comprise cushions or other protective elements in the rotatable support to protect the spar cap (or other composite parts) when being handled.

Figure 8 illustrates a top view of a support assembly 300 for rotating a composite part 201 according to an example. The support assembly 300 comprises a plurality of supports 200 comprising a stationary support, a rotatable support 220 and a link 340. The stationary supports are configured to support and guide the respective rotatable support 220. Further, the rotatable supports 220 are configured to receive the composite part 201 and secure it. Besides, the rotatable supports 220 are configured to rotate with respect to the respective stationary support 210. Note that in figure 6 the stationary supports are partially hidden below the rotatable support 220 and the composite part 201.

Additionally, the link 340 is configured to provide synchronization in rotation of the rotatable supports 220. As in the example of figures 6 and 7, the link 340 may provide synchronization by means of a mechanical connection, i.e. a structural element connecting the rotatable supports 220, by means of a communication link between drives or by a combination of the same.

Further, the support assembly 300 may comprise spacers 310 to distribute the plurality of supports 200 and fix them at a predetermined distance relative to each other. The spacers 310 may provide stability to the assembly and may assure that the distance between supports is such that the composite component 201 does not suffer from excessive bending. The spacers 310 may be of 5, 10 or 15 meters long. Although spacers with other dimensions cold also be employed depending on the specifications of the composite component 201 and of the supports 200. Depending on the spacer arrangement, the plurality of supports 200 may be spaced at spaced 3 meters or more, specifically 5 meters or more and more specifically 10 meters or more. Note that spacers 310 with other dimensions may lead to a greater or smaller distance between supports 200. Furthermore, the plurality of supports 200 may be spaced at a range of distances without spacers 310 between them. Also note that a physical link 340 may also serve as a spacer 310 and *vice versa,* i.e. a communication link 340 may be provided between two supports 200 through a rigid structural element.

Additionally, the plurality of rotatable supports 200 may comprise at least 5 or more, specifically 8 or more, and more specifically 12 rotatable supports 200 or more.

Figures 9 and 10 provide partial and a complete view respectively of a support assembly comprising a plurality of supports 200. In the example, the supports 200 are spaced equidistantly. The support assembly of this example comprises 15 supports and may span a length of e.g. 70 meters.

In examples, the composite component 201 may comprise a stack of pultruded plates infused with resin. The stack of pultruded plates may comprise carbon fiber, glass fiber, aramid fiber or other suitable fibers. Besides, the infused stack of pultruded plates may comprise epoxy resin, polyester resin, vinylester resin or other suitable resins.

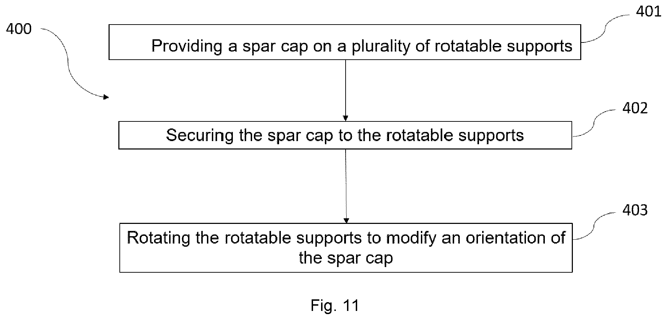

Figure 11 is a flow diagram of a method 400 for rotating a spar cap using rotatable supports 200 according to the present disclosure. The method 400 comprises, at block 401, providing a spar cap on a plurality of rotatable supports 200. Further, the method 400 also comprises, at block 402, securing the spar cap to the plurality of rotatable supports 200. Besides, the method 400 also comprises rotating 403 the plurality of rotatable supports 200 to modify an orientation of the spar cap.

In some examples, providing 401 the spar cap on the plurality of rotatable supports 200 comprises positioning the spar cap 401 in a substantially horizontal orientation.

In examples, rotating 403 the plurality of rotatable supports 200 comprises rotating the spar cap about 90 degrees to a substantially vertical orientation and inspecting a quality of the spar cap and/or performing a treatment on the spar cap. Rotations of the spar cap of other magnitudes are also possible, i.e. about 180 degrees or 270 degrees or others. For example, a rotation of approximately 20 degrees to tilt the spar cap, or several rotations of a given angle, i.e. 5 degrees, to examine the surface of the spar cap in detail are also considered. More specifically, rotating 403 the plurality of rotatable supports 200 may comprise rotating the spar cap 201 about 180 degrees to an inverted horizontal position and inspecting a quality of the spar cap 201 and/or performing a treatment on the spar cap 201.

Additionally, the method 400 may also comprise at least partially releasing the spar cap from the rotatable support 200. This may be done after rotating 403 the rotatable supports 200, so that the operators reach the surface of the spar cap below securing elements.

Further, the step of rotating 403 the rotatable supports 200 may comprise a synchronous rotation. Besides, rotating 403 the rotatable supports 200 may comprise a controller sending commands to an actuator, and the actuator rotating 403 at least one of the rotatable supports 200. In other examples, the rotation may be performed manually, i.e. by rotating 403 at least one of the rotatable supports, and the synchronization may be achieved by a mechanical element that transmits rotation between rotatable supports 200, i.e. a link 340.

Additionally, the plurality of rotatable supports 200 of method 400 may comprise at least 5 or more, specifically 8 or more rotatable supports. The rotatable supports 200 may be spaced 3 meters or more, specifically 5 meters or more and more specifically 10 meters or more.

In some examples, the step 401 of providing the spar cap on the plurality of rotatable supports 200 may comprise sliding the spar cap into the rotatable supports 220. Besides, after the rotation, i.e. a rotation of substantially 180 degrees, the method 400 may comprise sliding the spar cap out of the rotatable supports 220. To do so, the supports 200 may be configured to receive a spar cap through a lateral port, i.e. an opening in the rotatable support 220 that allow introducing the spar cap in a substantially horizontal direction. Further, the supports 200 may comprise a conveying assembly at least at one side of the rotatable support 220 to promote sliding the spar cap into the rotatable support 220.

Note that some of the technical features described in relation with the support 200 and support assembly 300 may be included in the method 400 for rotating a spar cap, and *vice versa.* Further, those of skill in the art would appreciate that the various steps described in connection with the rotation and synchronization of the supports 200 by the controllers and drives may be implemented as electronic hardware, computer software, or combinations of both. Whether such functionality is implemented as hardware or software depends upon the particular application and design constraints imposed on the overall system. Skilled artisans may implement the described functionality in varying ways for each particular application.

The controllers described in connection with the disclosure herein may be implemented or performed with one or more general-purpose processors, a digital signal processor (DSP), cloud computing architecture, an application specific integrated circuit (ASIC), a field programmable gate array (FPGA) , programmable logic controller (PLC) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The present disclosure also related to computing systems adapted to carry out any of the methods disclosed herein.

The present disclosure also relates to a computer program or computer program product comprising instructions (code), which when executed, performs any of the methods disclosed herein.

The computer program may be in the form of source code, object code, a code intermediate source and object code such as in partially compiled form, or in any other form suitable for use in the implementation of the processes. The carrier may be any entity or device capable of carrying the computer program.

If implemented in software/firmware, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD/DVD or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software/firmware is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

This written description uses examples to disclose the present teaching, including the preferred embodiments, and also to enable any person skilled in the art to practice it, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A support (200) for rotating a composite part (201), the support (200) comprising a stationary support (210) and a rotatable support (220), wherein
the stationary support (210) is configured to support the rotatable support (220), and
the rotatable support (220) is configured to receive the composite part (201), and secure the composite part (201), and wherein the rotatable support (220) is configured to rotate with respect to the stationary support (210) and to maintain an orientation of the composite part (201) at a plurality of discrete angular positions.

2. The support (200) according to claim 1, wherein the support (200) comprises a locking mechanism to fix a position of the rotatable support (210) relative to the stationary support (220).

3. The support (200) according to any of claims 1 or 2, wherein the rotatable support (220) comprises two portions (230, 240), a first portion (230) configured to receive the composite part (201) and a second portion (240) configured to secure the composite part (201).

4. The support (200) according to claim 3, wherein the first and second portions (230, 240) are detachable.

5. The support (200) according to any of claims 3 or 4, wherein the stationary support (210) comprises a contact surface (211) to support the rotatable support (220), and the two portions (230, 240) of the rotatable support (220) define a frame (221) comprising an outer surface that substantially matches the contact surface (211) of the stationary support (210).

6. The support (200) according to claim 5, wherein the contact surface (211) of the stationary support (210) is substantially concave and the frame (221) of the rotatable support (220) is substantially circular.

7. A support assembly (300) for rotating a composite part (201), the support assembly (300) comprising a plurality of supports (200) according to any of claims 1 - 6 and a link (340), wherein the link (340) is configured to provide synchronization in rotation of the rotatable supports (220).

8. The support assembly (300) of claim 7, wherein the link (340) is one or more of a mechanical link, or a communication link between drives of the rotatable supports (220).

9. The support assembly (300) to any of claims 7 or 8, wherein the rotatable supports are spaced at least 3 meters away from each other, specifically at least 5 meters away from each other.

10. A method (400) for rotating a spar cap using rotatable supports (200), the method comprising:
providing (401) a spar cap on a plurality of rotatable supports (200);
securing (402) the spar cap to the plurality of rotatable supports (200); and
rotating (403) the plurality of rotatable supports (200) to modify an orientation of the spar cap.

11. The method (400) according to claim 10, wherein rotating (403) the plurality of rotatable supports (200) comprises a synchronous rotation of the rotatable supports (200).

12. The method (400) according to any of claims 10 or 11, wherein separate drives are provided for the rotatable supports (200) and rotating (403) the plurality of rotatable supports (200) comprises the separate drives acting on corresponding rotatable supports (200).

13. The method (400) according to any of claims 10 - 12, wherein providing (401) the spar cap on the plurality of rotatable supports (200) comprises positioning the spar cap in a substantially horizontal orientation.

14. The method (400) according to claim 13, wherein rotating (403) the plurality of rotatable supports (200) comprises rotating the spar cap about 90 degrees to a substantially vertical orientation and inspecting a quality of the spar cap and/or performing a treatment on the spar cap.

15. The method (400) according to claim 13, wherein the rotating (403) the plurality of rotatable supports comprises rotating the spar cap about 180 degrees to an inverted horizontal position and inspecting a quality of the spar cap and/or performing a treatment on the spar cap.
